Europäisches Patentamt

European Patent Office

Office européen des brevets

(11) Publication number: **0 194 782 B1**

# EUROPEAN PATENT SPECIFICATION

(45) Date of publication of patent specification: **07.10.92**  (51) Int. Cl.⁵: **H04L 9/00**

(21) Application number: **86301387.6**

(22) Date of filing: **26.02.86**

(54) **Telecommunications security device.**

(30) Priority: **08.03.85 CA 476147**

(43) Date of publication of application:
**17.09.86 Bulletin 86/38**

(45) Publication of the grant of the patent:
**07.10.92 Bulletin 92/41**

(84) Designated Contracting States:
**AT BE CH DE FR GB IT LI LU NL SE**

(56) References cited:
**EP-A- 0 115 362
GB-A- 2 062 410
US-A- 4 430 728**

**NACHRICHTENTECHNISCHE ZEITSCHRIFT,
vol. 36, no. 8, August 1983, pages 500-504,
Berlin, DE; W. BOSCH: "Bildschirmtext
braucht Datensicherheit"**

(73) Proprietor: **The Manitoba Telephone System
Box 6666, 502, Empress Street
Winnipeg, Manitoba R3C 3V6(CA)**

(72) Inventor: **Pollard, Alan Jonathan
144 Brock Street
Winnipeg Manitoba(CA)**
Inventor: **Lemire, James Russel
1805 - 277 Wellington Crescent
Winnipeg Manitoba(CA)**

(74) Representative: **Frost, Dennis Thomas et al
WITHERS & ROGERS 4 Dyer's Buildings Hol-
born
London, EC1N 2JT(GB)**

# Description

This invention relates to a telecommunications security device for use on the public switched telephone network to prevent access to a user device connected to a telephone line on the telephone network and to a security key which may or may not be used with the security device.

Various security devices are currently available or have been disclosed in patent applications. Initially such security devices depended wholly upon the memory of the user to enter a secret user ID and a security code. However this technique is very open to abuse in that the security codes can be inadvertently transferred to unauthorized people or can be stolen. In other cases "hackers" can break the security codes by trying various different combinations and even if they are unable to break the code they can tie up telephone lines for long periods of time by the attempts to do so.

Recent more sophisticated techniques have involved filter or switching boxes inserted immediately prior to the user equipment. These devices generally include a central device at the equipment to be accessed together with a number of subsidiary devices which are issued to authorized users. On receipt of a telephone call, therefore, the central device issues a code signal on the line for receipt by the subsidiary device. The subsidiary device is then expected to re-issue a security code for recognition by the central device.

These devices use a technique whereby the initial signal generates by a suitable calculation or algorithm within the subsidiary device the return security signal for receipt and comparison by the central device which is doing the same calculation. However this arrangement is open to breaking by an unauthorized person sampling signals on the line and deducing the algorithm or calculation involved from a number of issued signals and response security signals. Examples of this type of system are disclosed in US-A-4626623, 4691355 and 4450535.

## SUMMARY OF THE INVENTION

It is one object of the present invention, therefore, to provide an improved security device for use on the public switched telephone network which is of a relatively simple and inexpensive nature and yet provides improved security against line tapping techniques.

According to the invention, therefore, there is provided a telecommunications security device for use on the public switched telephone network comprising a first and a second unit each adapted for placing in a respective telephone line between a user device and the telephone network, each of said units including memory means storing a plurality of security codes, said stored security codes in the first unit being identical to those in the second unit, said first unit including control means having means responsive to receipt of a telephone call on said respective telephone line and signal issuing means arranged to issue on said line a signal associated in said memory with one of said security codes on receipt of said telephone call, said second unit including control means having means responsive to receipt of said signal to extract from said memory said one security code associated therein with said signal and to issue on its respective telephone line said extracted security code, said first unit control means further including means for comparing a received security code on said telephone line with said one security code and for allowing transmission to said respective user device of said telephone call only upon a match of the received security code and said one security code, said signal issuing means being arranged, upon receipt of each following telephone call on said line, to issue on said line a signal associated with another of said security codes.

Preferably the security code and the associated signal are stored in pairs together in the memory and the first unit is arranged to extract the associated signals in turn so that each security code is used once and then the unit moves on to the next security code. The unit can include a device which indicates when all of the security codes have been used so that if desired the user can replace the memory with a fresh memory including a whole new set of security codes.

For this purpose the memory is preferably in a separate security key so that a whole set of security keys can be purchased together for insertion into the first unit and any number of second units positioned at authorized users.

The use of a memory to store a set of security codes together with the associated signal rather than the prior art arrangement of calculating from an input signal a security code by a repeatable mathematical function ensures that there is no code to be broken and it is not possible to predict a particular security code from monitoring past events.

It is a further object of the present invention to provide a security key which may be used with the above security device or may be modified to act as a secure memory for other similar devices such as encryption devices or other devices where a memory is required storing secret information for use by a separate unit.

According to the invention, therefore, there is provided a security key for providing a memory for storing required information for a security unit comprising a memory, a security logic circuit providing access to the memory and a casing supporting said memory and circuit whereby the key can be extracted and removed from the unit, said circuit including means providing a first state in which the required information can be written into the memory, a second state in which the memory is sealed and cannot be read, and a third state in which the memory can be read, said state providing means being arranged to prevent transfer from said third state to said second state except by said first state and erasing of information in said memory, means for receiving a command signal for transferring from said second state to said third state and means for indicating that said command signal has been received.

With the foregoing in view, and other advantages as will become apparent to those skilled in the art to which this invention relates as this specification proceeds, the invention is herein described by reference to the accompanying drawings forming a part hereof, which includes a description of the best mode known to the applicant and of the preferred typical embodiment of the principles of the present invention, in which:

## DESCRIPTION OF THE DRAWINGS

Figure 1 is a simple schematic illustration showing the connection of the security device according to the invention within the public switched telephone network.

Figure 2 is a block diagram of one unit of the telecommunications security device of Figure 1.

Figure 3 is a block diagram of the security key for connection to the unit of Figure 2.

Figure 4 is a flow chart for the second unit which acts as a remote or originating unit.

Figure 5 is a flow chart for the first unit which acts as a central or receiving unit.

Figure 6 is a front elevational view of a rack storing a plurality of the units of Figure 2.

Figure 7 is a circuit diagram of the security logic circuit of Figure 3.

In the drawings like characters of reference indicate corresponding parts in the different figures.

## DETAILED DESCRIPTION

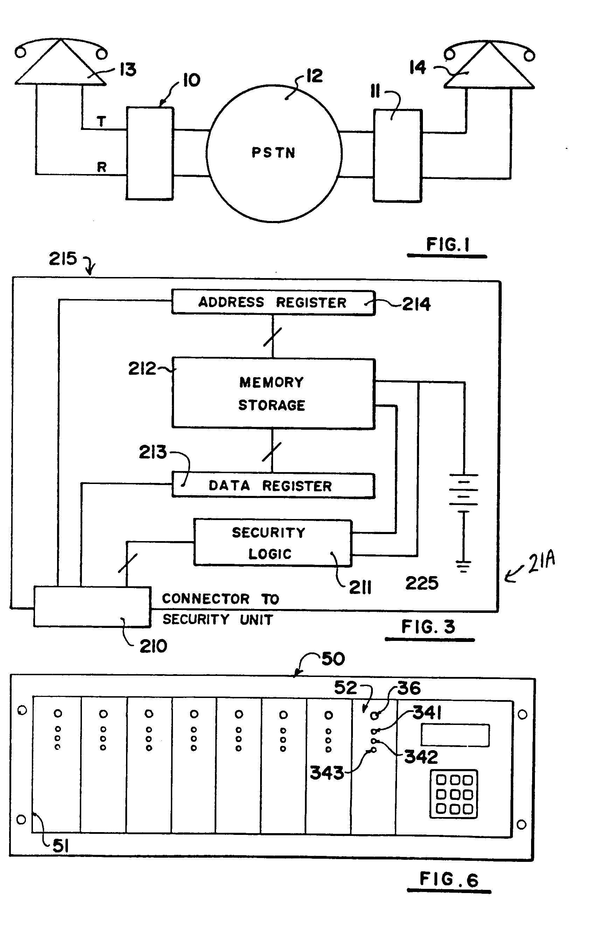

The security device according to the invention provides a first unit and a second unit indicated at 10 and 11 respectively in Figure 1 each of which is connected between the public switched telephone network indicated generally at 12 and a user device 13, 14.

In many cases the user device 13 will comprise a central access port which is intended to be accessed by a number of remote units one of which is indicated at 14. The use of the public switched telephone network provides of course the convenience of near universal access. However this access also provides the opportunity for unauthorized users to enter or attempt to enter the port and tamper with or extract information from the central port.

Although the invention therefore is shown as including only two such units there may be a large number of units provided only to authorized users. The units supplied to authorized users can be provided in a suitable plastics box having conventional jack plugs which enable the unit to be coupled into the telephone line immediately adjacent the user device which may be a computer terminal including a modem or other equipment. In addition the casing of the unit can include the necessary and conventional sealing arrangements to prevent tampering or stealing of the unit itself. However these features are not part of the present invention and therefore will not be described in detail.

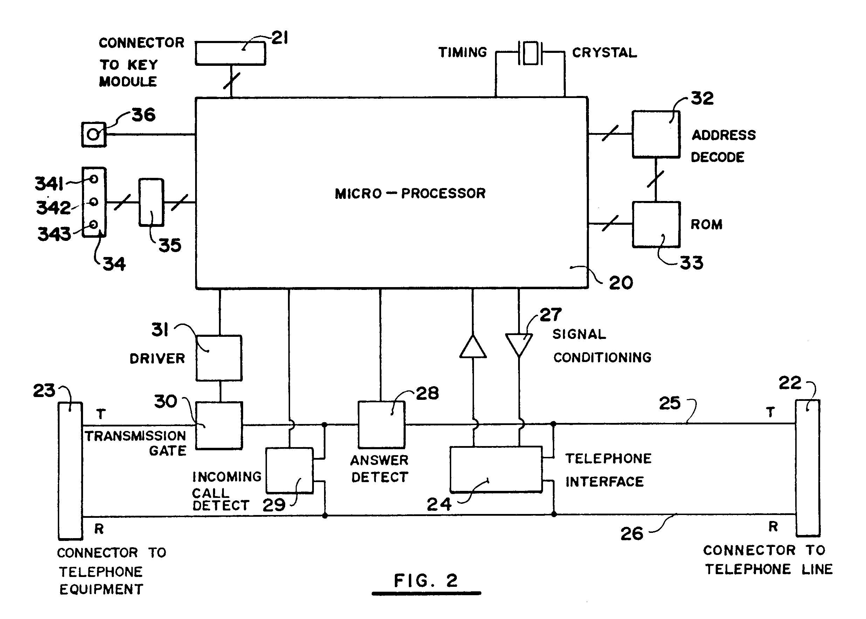

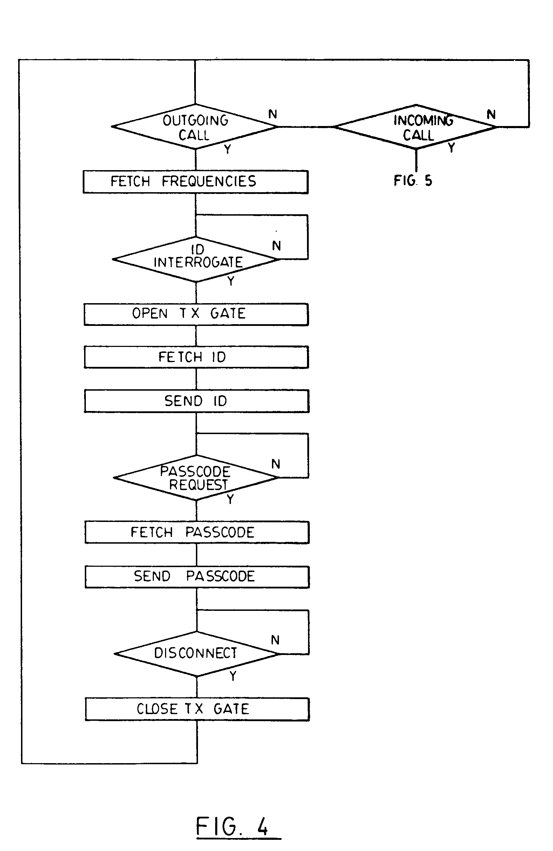

Turning now to the unit as shown in Figure 2, this comprises a central microprocessor 20 including a connector to a key module or security key indicated at 21 with the key itself being shown in detail in Figure 3. The unit further includes jack plugs 22 and 23 as previously described which are of a conventional type for connection to the telephone line. A telephone interface 24 is connected across the lines 25 and 26 for receiving signals on the line and for injecting signals back onto the line for transmission to the remote equipment. The interconnection between the telephone interface 24 and the microprocessor 20 includes signal conditioning devices 27 of conventional form. Further devices connected across the telephone line include an answer detect unit 28 and an incoming call detect unit 29 again of conventional construction. Finally, connected in one or both of the lines is a transmission gate 30 which is under the control of the microprocessor via a driver 31 which therefore allows or prevents access to the user equipment attached to the jack 23 depending upon the conditions sensed by the microprocessor as explained in detail hereinafter.

The microprocessor also has attached thereto an address decode unit 32 connected to a ROM 33. The microprocessor also drives a number of indicators 34 through a driver 35 and receives input from a test button 36.

The security key or key module is shown at 21A in Figure 3 again in block form and comprises a connector 210 for connection to the connector 21 of the unit of Figure 2. The connector communicates with a security logic circuit 211 which in turn communicates with a memory storage 212 including a data register 213 and an address register 214 whereby information can be introduced into the memory storage and extracted from the memory storage under control of the security logic 211.

The microprocessor 20 of the unit is preferably a Motorola MC146805 or equivalent. The processor is supported by a timing crystal. The address decode unit 32 and the ROM 33 are provided in accordance with operating instructions of the processor.

For convenience of manufacture and also to enable the units to be used in a situation where each party is free to call the other that is calls can originate at either of the units 10 and 11, the units are identical and each can carry out the functions as explained hereinafter. However if required, each can be limited to one of the functions by storage of a simple command in the microprocessor.

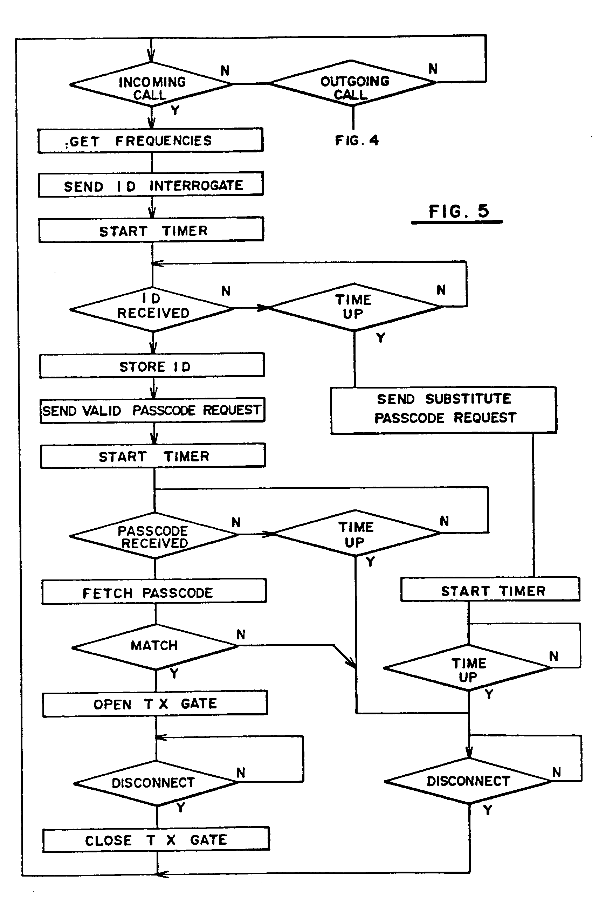

Turning now to the flow chart of the receiving unit shown in Figure 5, the unit will leave idle state upon detection of an answer condition of an incoming call. The public switched telephone network or PSTN provides an incoming call indication to the address required usually by application of a voltage to the line intended to cause the audible ringing common to most voice telephone terminal equipment. When the telephone terminal equipment provides an answer indication, usually by drawing more than a certain amount of direct current from the PSTN, the PSTN will create a communication channel between the call originator and the destination. Thus the answer detect unit 28 of Figure 2 detects the answer condition provided by the user equipment attached to the jack 23. This answer detect is communicated to the microprocessor. The microprocessor then acts to retrieve from the security key memory 212 operating frequencies which act as an identity interrogation signal for transmission on the line. The operating frequency signal is transmitted via the telephone interface 24 on the line to the remote location from which the call is originated.

This operating frequency signal which is also stored in the memory of the originating unit acts as an interrogation signal requiring the originating unit to submit an identity signal as will be explained hereinafter.

This arrangement whereby the microprocessor responds to the telephone call by the operating frequency avoids the line returning the carrier tone which is usually provided by a computer port modem and provides the characteristic tone which indicates to the knowledgeable telephone user that the line is connected to a computer modem. This feature therefore prevents "hackers" from discovering computer ports by scanning telephone exchanges looking for the characteristic tone.

The microprocessor simultaneously with controlling the transmission of the ID interrogation signal starts a timer providing a period of time in which the required ID signal must be received.

On receipt of an ID signal within the required period of time, the ID signal is checked to be of a proper format and stored in the memory for future use. The microprocessor 20 then moves to extract from the memory one of the plurality of pass code requests for transmission through the interface 24.

The memory 212 of the security key is arranged to provide sufficient amount of memory to store for example 500 pairs of 32 bit security codes and associated request signals. Thus the memory is divided into memory location pairs with each pair including a first signal which will be transmitted and a second signal which will be expected in reply.

The microprocessor 20 is arranged so that it looks in the memory to each pair in turn and extracts from that pair the request signal for transmission on the line. The key functions by receiving an address, in serial form, from the processor, decoding the address and returning the data at that address to the processor, also in serial form. The address information will be as large as it needs to be to uniquely select data from the key. This will be at least 24 bits but may need to be larger for some applications.

Having thus selected the next in turn request signal from the connected security key memory, and transmitted this on the telephone line through the interface 24, the microprocessor again starts a timer circuit providing a short period of time in which it expects to receive the required security code.

On receipt of a security code, the microprocessor acts to extract from the memory the security code associated in the memory with the request signal previously extracted. The processor then acts to compare the received security code with the expected security code. On obtaining a match between the security codes, the microprocessor acts to control the gate 30 through the driver 31 to open the transmission gate to allow communication between the network and the user equipment.

In order therefore to obtain the necessary opening of the transmission gate, it is necessary for the microprocessor to initially receive an ID signal of the required format within a required period of time and subsequently to receive the required pass code or security code again within the required period of time.

After the transmission gate has been opened, the microprocessor acts to monitor a disconnect of the communication channel and upon detecting such a disconnect acts to close the transmission gate. It is then in the position to receive a further incoming call and repeat the cycle. On such receipt of a further call, it will be appreciated that the unit follows the same procedure expect that it extracts from the memory unit the next pair of ID request signal and associated security code so that the signal and expected returned code are totally different and in no way connected with the signals previously issued.

As shown in the flow chart of Figure 5, it will be noted that if the ID signal is not received within the required period of time that is the time up signal is generated by the timer circuit, the microprocessor moves to the next step of issuing the pass code request. It cannot therefore act to open the transmission gate if the ID signal is not received in due time. Thus if the response is not received in time, the device will proceed automatically to the pass code request but the pass code will not be checked and no communication will be allowed to the terminal equipment. The microprocessor includes a simple calculation algorithm for developing a false request signal similar to but different from the actual stored signals so as to avoid using an actual signal which could give out information. The device will always behave in the same way regardless of the information it is given in order to provide an unauthorized user with no information that might assist in by-passing the device. Similarly if the pass code is not received or is not received in time the microprocessor moves to the disconnect procedure and reverts to the idle state waiting for a new call.

Turning now to the flow chart of the originating unit shown in Figure 4, the device will leave idle state upon the detection of an outgoing call originating at the terminal equipment with which the unit is associated and acts to fetch the operating frequencies. It then acts to look for the operating frequencies issued by the receiving unit and on receipt of the ID interrogate signal will act to open the transmission gate and fetch the ID from the memory and to transmit the ID on the line via the interface 24. It will then enter a wait loop for the pass code request from the receiving unit. When the request is received, the microprocessor 20 will act to retrieve and send from the memory the pass code associated with the ID request signal in the memory. If an incorrect request signal is received, the microprocessor on failing to find a match in the memory acts to generate, by an algorithm a false pass code which is then sent to avoid the release of information about the system. The unit then remains in connected state until it detects a disconnect of the communication channel following which it will close the transmission gate.

Thus the unit can act, as previously explained, either as a receiving unit or as an originating unit and the microprocessor acts accordingly to extract the relevant information from the memory as required.

Turning now to the indicators associated with the microprocessor 20, these are arranged to be driven briefly when the equipment attached to the unit is taken off hook so that the unit extracts power from the telephone line for a short period of time sufficient to drive the indicators briefly for observation by the user.

The first of the indicators shown at 341 is used to indicate when all of the memory locations in the memory have been used once that is all of the pairs of request signals and associated security codes have been used and thus will be repeated if the unit continues to use the same memory storage.

The second indicator shown at 342 will be illuminated if the unit detects receipt of a security code which fails to properly match with the expected security code. This will indicate that an unauthorized user has attempted to breach the security and has failed to do so. The third indicator shown at 343 is used to show that a newly introduced key has previously been read as will be explained in more detail hereinafter. The test button 36 is used to reset the indicators 341, 342 and 343 so that after the information has been extracted the indicators revert to their initial condition.

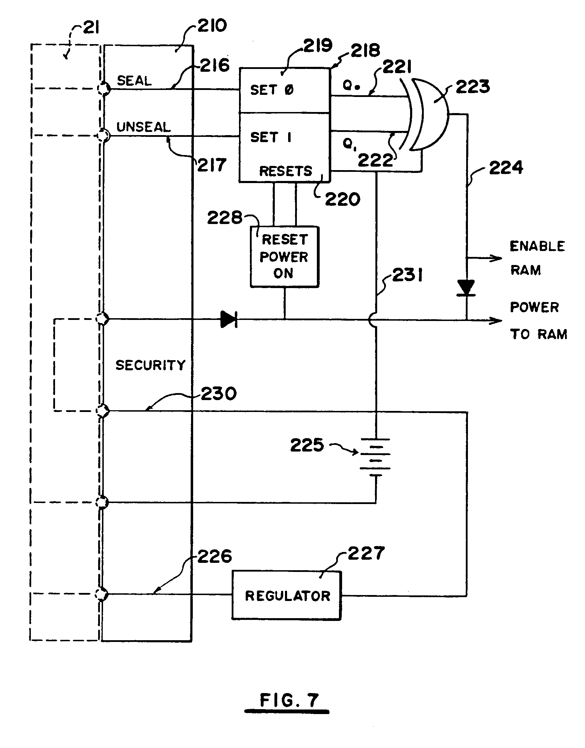

Turning now to Figure 6, there is shown a rack unit for storing a plurality of security units each of the type shown in Figure 2. Such a rack unit is generally indicated at 50 and is used in conjunction with a multi-port access terminal so that each unit is associated with a respective one of a plurality of telephone lines. The units each act in the manner previously described but can be coupled together so as to provide on a common bus information concerning the received ID signals, times of connect and times of disconnect and also the information concerning improper pass codes. Such a rack unit can comprise simple receiving areas 51 for a circuit board 52 so that the unit can be provided without the necessary housing necessary for a single unit. The rack unit can then be coupled to a conventional printer or other data equipment to print out information extracted from the individual units. Such information can be used for keeping a record of access by various authorized users by way of their received ID for billing or other purposes.

Turning now to the security key of Figure 3, it will be appreciated that this key is mounted in a housing 215 so that it is separable from the unit itself and thus a complete set of identical keys can be obtained for a group of the units and introduced or replaced whenever necessary. Thus when the memory has been used once it is a simple matter to replace the keys by re-written keys with a new memory storage each of which of course is identical except for the unique ID.

The security logic circuit 211 controls the reading and writing of the pairs of request signals and security codes within the memory storage. The security logic circuit is arranged so that after writing the required information into the memory it can receive a seal command which acts to prevent the security logic circuit re-transmitting the information from the memory storage.

Turning therefore to Figure 7, a simple circuit diagram is shown for the security logic circuit of Figure 3. Specifically the circuit includes the connnector 210 for connection to the connector 21 of the main unit. The connector 210 includes a first line 216 and a second line 217 indicated as "seal" and "unseal" respectively which are connected to a pair of flip flops 218 which in conventional manner have two separate states indicated at 0 and 1 respectively. The outputs of the two separate flip flops 219 and 220 of the pair 218 are coupled at 221 and 222 to an exclusive or-gate 223 of conventional form. The output from the exclusive or-gate 223 indicated at 224 acts to enable or disable the memory or RAM 212 depending upon the output on the line 224, that is a state 0 acts to enable the RAM and a state 1 to disable the RAM.

The key further includes a battery 225 which is connected through the connector 210/21 to provide power to the memory 212 for retaining the memory when the device is disconnected from the main unit. A secondary power from the unit is provided on the line 226 through a regulator 227 so that the battery power is only used for storage when the key is disconnected.

The flip flops 218 can only be reset via a reset unit 228 so that once switched from 0 state to the 1 state remain in that state until reset.

In a first state of the key after initial manufacture and prior to insertion of any records into the memory, both the flip flops are at 0 state thus providing a state 0 on the line 224 to enable connection to the memory 212. At this time the link indicated at 230 is disconnected and the line 224 is at state 0, hence there is no power to the memory.

At the next stage the key is inserted into the unit thus completing the connection at 230 and providing power to the memory or RAM 212. At this state the memory can be written with the necessary information and the memory reread to provide a verification of the necessary information.

At this time a seal command can be supplied on the line 216 from the main writing unit thus putting the first flip flop 219 into a state 1. The line 224 thus turns to the state 1 disabling the RAM.

In this condition the key can be separated from the writing unit and sent to the remote destination using normal channels. Power to the RAM is supplied by the battery 225 through a line 231, or-gate 223 and line 224.

When received at the remote destination for usage, the key is inserted into the unit and connected thus to the connector 21. The first action of the security unit on receiving a telephone call, that is if the hand set is lifted at the user equipment, is to attempt to read the memory. An indicator on the security unit is illuminated to show that the unit is unable to read the memory so that the user can immediately see if the memory can be read. If the memory can be read it has thus received an unseal command as explained hereinafter and thus has been or may have been read and thus is no longer secure.

If the memory is unable to be read, that is it has not yet received the unseal command, the pressing of the button 36 acts to send an unseal command on the line 217 thus changing the state of the flip flop 220 to a state 1 which provides a state 0 on the line 224 thus enabling the RAM. Power to the RAM is supplied at this stage via the regulator 227 and the link 230.

The security key can thus continue to be used while connected to the security unit and provides the memory as previously explained.

However, on separation from the main unit the link 230 is severed and the line 224 is at state 0 thus providing no power to the RAM and erasing the memory.

The flip flops 218 can only be reset subsequent to complete erasing of the memory through the reset unit 228. In other words the unit 228 only acts upon the removal of power from and subsequent restoration of power to the RAM and thus once the flip flop 220 has been changed to the state 1, it cannot be reverted to state 0 without erasing the memory. This technique does therefore not necessarily prevent the memory being read but certainly provides an indication in a simple manner that it may have been or has been read whereupon immediate knowledge is obtained of the breach of security following which all of the keys including that memory can be re-written with fresh information.

Instead of the hardware described above in relation to Figures 3 and 7, the functions described could be performed by a microprocessor programmed with suitable logic.

The telecommunications security device therefore provides a number of advantages. Firstly it is resistant from any communication based break-in attempt including those involving line tapping since recording of previous information gives no details whatever concerning later required passwords. Secondly the unit is completely user transparent that is no action is required by the user and it does not rely upon any memory of the user to actuate the transmission gate. Thirdly the unit does not in any way interfere with the use of the telephone equipment to communicate with other unsecured telephone addresses.

The key arrangement itself and particularly the security system whereby the key records the receipt of the necessary command to read the key can be used with other equipment following suitable modification to the stored memory and logic circuit as will be apparent to one skilled in the art. Such other equipment could be encryption devices where the necessary code for the encryption is stored in the memory and can be replaced by replacement or re-writing of the memory.

In order to provide further security against reading of a key, the security logic circuit or the main unit microprocessor includes means for generating a number similar to a security code when a signal similar to a security code request signal is received. Thus in order to read all the codes from the memory it is necessary to enter a very large number of possible numbers, very much larger than the number of security codes actually stored. As the security codes and the associated signals are chosen at random from a 32 bit binary number it is necessary to enter all such possible numbers in order to read the associated security code. Of course many of the numbers will not have a security code since they are not stored as associated signals but the device for generating the number similar to the security code will produce a number thus requiring the equipment reading the memory to store all the received security code numbers since it will not know which ones are proper ones and which ones are not.

In addition information stored in the key can restrict operation of the associated unit to permit or deny incoming or outgoing calls as required.

**Claims**

1. A telecommunications security device for use on the public switched telephone network comprising a first and a second unit each adapted for placing in a respective telephone line between a user device and the telephone network, said first unit including control means having means responsive to receipt of a telephone call on said respective telephone line and signal issuing means arranged on receipt of said telephone call to issue on said line a security code request signal, said second unit including control means having means responsive to receipt of said security code request signal to generate a security code associated with said security code request signal and to issue on its respective telephone line said security code, said first unit control means further including means for comparing a received security code on said telephone line with a security code therein and for allowing transmission to said respective user device of said telephone call only upon a match of the received security code and said security code therein, characterized in that each of said units (10,11) includes memory means (212) storing a plurality of security codes, said stored security codes in the first unit (10) being identical to those in the second unit (11) and each security code being associated in said memory with a respective security code request signal whereby said second unit (11) generates said security code by extracting from the memory that security code which is associated with the respective security code request signal, and in that said signal issuing means is arranged, upon receipt of each following telephone call on said line, to issue on said line a security code request signal associated with another of said security codes.

2. The invention according to Claim 1 wherein the signal issuing means (20) is arranged to select each security code in turn and for each received telephone call to issue a security code request signal associated with the security code which is next in turn.

3. The invention according to Claim 2 including means (341) for indicating when all of said security codes have been selected.

4. The invention according to Claim 1, 2 or 3 wherein said memory means (212) is arranged such that each security code and each said associated security code request signal are both stored in said memory whereby said signals and said security codes are randomly chosen from a number larger than the number of security codes.

5. The invention according to Claim 1 wherein the second unit (11) control means includes means (20) for generating a code similar in appearance to a security code when a signal similar in appearance to but different from a security code request signal is received by said second unit.

6. The invention according to Claim 1 wherein said memory means (212) of each of said units is provided in a security key device (21A) separable from said first and second unit.

7. The invention according to Claim 6 wherein the security key device (21A) includes a security logic control unit (211) arranged, upon writing of said security codes into said memory (212), to prevent reading of said security codes from said memory means until receipt of a command and to record receipt of said command, said unit including means (343) for determining and indicating receipt of said command in said key, said determining means being actuated on insertion of said key into said unit whereby a user can determine whether a security key has been read prior to insertion into said unit.

8. A security unit including a memory for storing required information for carrying out functions in said unit characterized in that there is provided a security key (21A) including said memory (212), a security logic circuit (211) providing access to the memory (212), a casing (215) supporting said memory (212) and circuit (211) whereby the key (214) can be extracted and removed from the unit (10,11), said circuit including means providing a first state in which the required information can be written into the memory, a second state in which the memory is sealed and cannot be read, and a third state in which the memory can be read, said state providing means (218) being arranged to prevent transfer from said third state to said second state except via said first state and erasing of information in said memory, and means (216) for receiving a command signal for transferring from said second state to said third state, and in that said unit includes means (343) for detecting that said command signal has been received.

9. The invention according to claim 8 wherein said detecting means (343) comprises means for reading said memory and providing an indication that said memory is readable.

10. The invention according to claim 8 or 9 wherein said unit and said key (21A) are arranged whereby removal of said key from said unit causes power to be removed from said memory (212).

**Patentansprüche**

1. Telekommunikations-Sicherheitsvorrichtung zur Anwendung beim öffentlichen Fernsprechnetz, mit einer ersten und einer zweiten Einheit, die beide zur Anordnung in einer entsprechenden Fernsprechleitung zwischen einer Anwendereinrichtung und dem Fernsprechnetz geeignet sind, wobei die erste Einheit eine Steuereinrichtung mit einer auf den Eingang eines Telefonrufs in der entsprechenden Fernsprechleitung ansprechenden Einrichtung und eine Signalausgabeeinrichtung aufweist, die zur Ausgabe eines Sicherheitscodeanforderungssignals in der Fernsprechleitung bei Eingang des Telefonanrufs eingerichtet ist, wobei die zweite Einheit eine Steuereinrichtung mit einer Einrichtung aufweist, die auf den Eingang des Sicherheitscodeanforderungssignals anspricht, um einen dem Sicherheitscodeanforderungssignal zugeordneten Sicherheitscode zu erzeugen und den Sicherheitscode auf ihrer entsprechenden Fernsprechleitung auszugeben, und wobei die Steuereinrichtung der ersten Einheit des weiteren eine Einrichtung zum Vergleich eines in der Fernsprechleitung eingegangenen Sicherheitscodes mit einem in ihr befindlichen Sicherheitscode und zur Ermöglichung einer Übertragung des Telefonanrufs auf die Anwendereinrichtung nur bei Übereinstimmung zwischen dem eingegangenen Sicherheitscode und dem in ihr befindlichen Sicherheitscode aufweist, dadurch gekennzeichnet, daß jede der Einheiten (10, 11) eine eine Vielzahl Sicherheitscodes speichernde Speichereinrichtung (212) aufweist, wobei die in der ersten Einheit (10) gespeicherten Sicherheitscodes mit denen in der zweiten Einheit (11) identisch sind und jeder Sicherheitscode in der Speichereinrichtung einem entsprechenden Sicherheitscodeanforderungssignal zugeordnet ist, wodurch die zweite Einheit (11) den Sicherheitscode durch Auswahl des dem entsprechenden Sicherheitscodeanforderungssignal zugeordneten Sicherheitscodes aus der Speichereinrichtung erzeugt, und daß die Signalausgabeeinrichtung bei Eingang jedes folgenden Telefonanrufs in der Fernsprechleitung ein einem anderen der Sicherheitscodes zugeordnetes Sicherheitscodeanforderungssignal ausgibt.

2. Vorrichtung nach Anspruch 1, bei der die Signalausgabeeinrichtung der Reihe nach jeden Sicherheitscode auswählt und für jeden eingegangenen Telefonanruf ein dem als nächsten an der Reihe seienden Sicherheitscode zugeordnetes Sicherheitscodeanforderungssignal ausgibt.

3. Vorrichtung nach Anspruch 2, die eine Einrichtung zur Anzeige, daß alle Sicherheitscodes ausgewählt worden sind, aufweist.

4. Vorrichtung nach Anspruch 1, 2 oder 3, bei der die Speichereinrichtung (212) so ausgebildet ist, daß jeder Sicherheitscode und jedes zugeordnete Sicherheitscodeanforderungssignal beide im Speicher gespeichert sind, wodurch die Signale und die Sicherheitscodes zufällig aus einer Anzahl ausgewählt werden, die größer ist als die Anzahl der Sicherheitscodes.

**5.** Vorrichtung nach Anspruch 1, bei der die Steuereinrichtung der zweiten Einheit (11) eine Einrichtung (20) aufweist, die einen einem Sicherheitscode in der Erscheinung ähnlichen Code erzeugt, wenn ein einem Sicherheitscodeanforderungssignal in der Erscheinung ähnliches, jedoch von diesem unterschiedliches Signal von der zweiten Einheit angenommen wird.

**6.** Vorrichtung nach Anspruch 1, bei der die Speichereinrichtung (212) jeder der Einheiten in einer Sicherheits-Chiffrierschlüsseleinrichtung (21A) vorgesehen ist, die von der ersten und der zweiten Einheit trennbar ist.

**7.** Vorrichtung nach Anspruch 6, bei der die Sicherheits-Chiffrierschlüsseleinrichtung(21A) eine Sicherheitslogiksteuereinheit (211) aufweist, die beim Einschreiben der Sicherheitscodes in die Speichereinrichtung (212) das Lesen der Sicherheitscodes aus der Speichereinrichtung bis zum Eingang eines Befehls verhindert und den Eingang des Befehls aufzeichnet, wobei die Einheit eine Einrichtung (343) zur Entscheidung und zur Anzeige des Eingangs des Befehls in dem Chiffrierschlüssel aufweist, wobei die Einrichtung zur Entscheidung bei Einführung des Chiffrierschlüssels in die Einheit aktiviert wird, wodurch ein Anwender entscheiden kann, ob ein Sicherheits-Chiffrierschlüssel vor Einführung in die Einheit gelesen worden ist.

**8.** Sicherheitseinheit mit einem Speicher zur Speicherung angeforderter Informationen zur Ausführung von Funktionen in der Einheit, dadurch gekennzeichnet, daß ein Sicherheits-Chiffrierschlüssel (21A) vorgesehen ist, der die Speichereinrichtung (212), eine Sicherheitslogikschaltung (211), die Zugang zur Speichereinrichtung (212) gewährt, und ein Gehäuse (215), das die Speichereinrichtung (212) und die Schaltung (211) lagert, aufweist, wodurch der Chiffrierschlüssel (214) aus der Einheit (10, 11) herausgezogen und von ihr entfernt werden kann, wobei die Schaltung eine Einrichtung zur Erzeugung eines ersten Zustands, bei dem die angeforderte Information in die Speichereinrichtung geschrieben werden kann, eines zweiten Zustands, in dem die Speichereinrichtung abgeschlossen ist und nicht gelesen werden kann, und eines dritten Zustands, in dem die Speichereinrichtung gelesen werden kann, aufweist, wobei die Zustandserzeugungseinrichtung (218) den Übergang vom dritten Zustand in den zweiten Zustand außer über den ersten Zustand und die Löschung von Informationen in der Speichereinrichtung verhindert, wobei der Sicherheits-Chiffrierschlüssel des weiteren eine Einrichtung (216) zum Empfang eines Befehlssignals für den Übergang aus dem zweiten Zustand in den dritten Zustand aufweist, und daß die Einheit eine Einrichtung (343) zur Erfassung, daß das Befehlssignal empfangen worden ist, aufweist.

**9.** Sicherheitseinheit nach Anspruch 8, bei der die Erfassungseinrichtung (343) eine Einrichtung zum Lesen der Speichereinrichtung und zur Erzeugung eines die Lesbarkeit der Speichereinrichtung anzeigenden Anzeige aufweist.

**10.** Sicherheitseinheit nach Anspruch 8 oder 9, bei der die Einheit und der Chiffrierschlüssel (21A) so eingerichtet sind, daß eine Entfernung des Chiffrierschlüssels von der Einheit dazu führt, daß der Speichereinrichtung (212) die Energie entzogen wird.

**Revendications**

**1.** Un dispositif de sécurité de télécommunications pour utilisation sur le réseau téléphonique commuté comprenant une première et une deuxième unités conçues chacune pour insertion dans les lignes téléphoniques respectives raccordant un dispositif d'utilisateur et le réseau téléphonique, ladite première unité comportant des moyens de command sensibles à la réception d'un appel téléphonique sur ladite ligne téléphonique respective, et des moyens générateurs de signal susceptibles, suite à la réception dudit appel téléphonique, d'émettre sur ladite ligne, un signal de demande de code de sécurité, ladite deuxième unité comportant des moyens de commande munis de moyens sensibles à la réception dudit signal de demande de code de sécurité afin de générer un code de sécurité associé audit signal de demande de code de sécurité et d'émettre, sur sa ligne téléphonique respective, ledit code de sécurité, lesdits moyens de commande de la première unité comprenant également des moyens pour comparer un code de sécurité reçu sur ladite ligne téléphonique avec un code de sécurité qui y est incorporé et pour permettre la transmission vers ledit dispositif respectif d'utilisateur dudit appel téléphonque uniquement dans le seul cas où il y a correspondance entre le code de sécurité reçu et ledit code de sécurité incorporé, caractérisé en ce que chacune desdites unités (10, 11) comprend des moyens de mémoire (212) gardant en mémoire une pluralité de codes de sécurité, lesdits codes de sécurité stockés dans la première unité (10) étant identiques à ceux stockés dans la deuxième unité (11) et chaque code de sécurité étant associé, dans ladite mémoire, à un signal correspondant de demande de code de sécurité de manière à ce que ladite deuxième unité (11) génère ledit code de sécurité en extrayant de ladite mémoire celui des codes de sécurité qui est associée au signal correspondant de demande de code de sécurité, et en ce que lesdits moyens de génération de signal sont adaptés, suite à la réception de chacun des appels téléphoniques suivants sur ladite ligne, à émettre sur ladite ligne un signal de demande de code de sécurité associé à un autre desdits codes de sécurité.

2. L'invention selon la revendication 1, dans lequel les moyens de génération de signal (20) sont conçus afin de sélectionner chaque code de sécurité dans l'ordre l'un après l'autre et de manière à ce que chaque appel téléphonique génère un signal de demande de code de sécurité qui est associé au code de sécurité qui, dans l'ordre, est le suivant.

3. L'invention selon la revendication 2, comportant des moyens (341) pour indiquer quand tous les codes de sécurité ont été sélectionnés.

4. L'invention selon la revendication 1, 2 ou 3, dans lequel lesdits moyens de mémoire (212) sont agencés d'une telle manière que chaque code de sécurité et chacun desdits signaux de demande de code de sécurité qui y est associé soient stockés tous les deux dans ladite mémoire de sorte que lesdits signaux et lesdits codes de sécurité soient sélectionnés au hasard hors d'ucn nombre de ceux-ci qui est supérieure au nombre de codes de sécurité.

5. L'invention selon la revendication 1, dans lequel les moyens de commande de la deuxième unité (11) comporte des moyens (20) susceptibles de générer un code qui ressemble à un code de sécurité quand un signal qui ressemble à lui mais qui est différent d'un signal de demande de code de sécurité est reçu par ladite deuxième unité.

6. L'invention selon la revendication 1, dans lequel lesdits moyens de mémoire (212) de chacune desdites unités sont munis d'un dispositif à clef de sécurité (21A) qui est séparable de ladite première et de ladite deuxième unités.

7. L'invention selon la revendication 6, dans lequel le dispositif à clef de sécurité (21A) comporte un circuit logique de commande de sécurité (211) adapté, suite à l'écriture desdits codes de sécurité dans ladite mémoire (212) à empêcher la lecture desdits codes de sécurité à partir desdits moyens de mémoire jusqu'à la réception d'une commande et à enregistrer la réception de ladite commande, ladite unité comportant des moyens (343) pour déterminer et pour indiquer la réception de ladite commande par ladite clef, lesdits moyens de détermination étant activés par l'insertion de ladite clef dans ladite unité de manière à ce qu'un utilisateur puisse déterminer si une clef de sécurité a été lue avant d'insérer cette dernière dans ladite unité.

8. Un dispositif de sécurité comprenant une mémoire de stockage des données nécessaires à la réalisation de certaines fonctions de ladite unité, caractérisé en ce qu'il comprend une clef de sécurité (21A) qui inclut ladite mémoire (212), un circuit logique de sécurité (211) assurant l'accès à la mémoire (212), un boîtier (215) supportant ladite mémoire (212) et le circuit (211), la clef (214) étant susceptible d'être extraite et enlevée de l'untié (10, 11), ledit circuit comportant des moyens susceptibles d'assurer un premier état permettant l'écriture des informations nécessaires dans la mémoire, et un deuxième état dans lequel la mémoire est verrouillée et ne peut pas être lue, et un troisième état permettant la lecture de la mémoire, lesdits moyens (218) susceptibles d'assurer un état étant agencés afin d'empêcher un basculement à partir dudit troisième état vers ledit deuxième état sauf sute à un passage par ledit premier état avec l'effacement des informations dans ladite mémoire, et des moyens (216) de réception d'un signal de commande de basculement dudit deuxième état audit troisième état, et en ce que ladite unité comporte des moyens (343) pur détecter la réception dudit signal de commande.

9. L'invention selon la revendication 8, dans lequel lesdits moyens de détection (343) comprend des moyens adaptés à lire ladite mémoire et à fournir une indication que ladite mémoire est lisible.

10. L'invention selon la revendication 8 ou 9, dans lequel ladite unité et ladite clef (21A) sont agencées d'une telle manière que l'enlèvement de ladite clef de ladite unité supprime l'alimentation électrique de ladite mémoire (212).

FIG.1

FIG. 3

FIG.6

FIG. 2

FIG. 4

EP 0 194 782 B1

FIG. 5

FIG. 4

FIG. 7